# EUROPÄISCHE PATENTSCHRIFT

(11) **EP 2 357 067 B1**
(45) Veröffentlichungstag und Bekanntmachung des Hinweises auf die Patenterteilung: **14.10.2015**
(21) Anmeldenummer: 11154078.7
(22) Anmeldetag: 10.02.2011
(51) Int. Cl.: B29B 17/02

(54) **Verfahren und Anlage zum Aufbereiten eines metall- und kunststoffhaltigen Gemenges**
Method and assembly for preparing a mixture containing metal and plastic
Procédé et installation de préparation d'un mélange contenant du métal et une matière synthétique

(30) Priorität: 10.02.2010 DE 102010000357
(43) Veröffentlichungstag der Anmeldung: 17.08.2011
(73) Patentinhaber: MultiPet GmbH, 06406 Bernburg (DE)
(72) Erfinder: Ruft, Matthias, 06388 Edderitz (DE); Peinelt, Uwe, 06408 Gröna (DE)
(74) Vertreter: Katscher Habermann Patentanwälte

(56) Entgegenhaltungen:
- DE-A1- 4 100 346
- DE-A1- 4 306 781
- JP-A- 5 147 040

## Beschreibung

Die Erfindung betrifft ein Verfahren und eine Anlage zur Aufbereitung eines metall- und kunststoffhaltigen Gemenges beispielsweise von Abfällen, bzw. von Recyclingmaterial für den Betrieb einer Recyclinganlage, die eine Mehrzahl von aufeinanderfolgenden Bearbeitungsstationen aufweist, bei dem zumindest eine Dichtetrennung des Gemenges in einem Flüssigkeitsbad und eine Zerkleinerung des Gemenges durchgeführt wird, wobei vor einer ersten Dichtetrennung des Gemenges in einem Flüssigkeitsbad das metall- und kunststoffhaltige Gemenge zerkleinert und nachfolgend eine Wirbelstromabscheidung von zerkleinerten Metallteilen durchgeführt wird, bevor anschließend eine Dichtetrennung des Gemenges in einem Flüssigkeitsbad durchgeführt wird. Derartige Verfahren sind beispielsweise aus der Druckschrift DE 43 06 781 A1 bekannt und werden insbesondere auch dazu durchgeführt, um verwertbare Materialanteile, insbesondere Metalle und Kunststoffmaterial, aus dem metall- und kunststoffhaltigen Gemenge an Altmaterialien zu gewinnen. Hierbei wird das metall- und kunststoffhaltigen Gemenge durch mehrere Bearbeitungsstationen gefördert, die jeweils einzelne Komponenten des Gemenges abscheiden oder für eine Abscheidung vorbereiten, so dass im Verlauf des Verfahrens Metalle oder Kunststoffmaterial jeweils möglichst sortenrein aus dem Gemenge ausgesondert und einer erneuten Verwendung bzw. einer weiteren Verwertung zugeführt werden können.

Es sind beispielsweise Metallsensoren angeordnet, die das Gemenge mittels magnetischer Induktion analysieren und auf Metallhaltigkeit untersuchen. Werden Metalle erkannt, so werden mit bekannten Verfahrensschritten die jeweiligen Metallteile beispielsweise magnetisch ausgesondert. Es ist auch bekannt, aus dem unzerkleinerten Gemenge größere Metallteile durch eine Wirbelstromabscheidung auszusondern.

Des Weiteren können beispielsweise Trennvorrichtungen für unterschiedliche Kunststoffmaterialien vorgesehen sein.

Neben den Metallanteilen des metall- und kunststoffhaltigen Gemenges besteht oftmals ein erhebliches Interesse an einer möglichst sortenreinen und nicht durch beispielsweise metallhaltige Partikel verunreinigten Abscheidung einzelner Kunststoffe, die anschließend einer Wiederverwendung, bzw. Wiederverwertung zugeführt werden sollen.

Es hat sich dabei als nachteilig herausgestellt, dass lediglich ab einer bestimmten Größe der Metallteile eine Trennung von dem metallhaltigen Gemenge effizient durchführbar ist und vor allem kleine Metallteile im Gemenge verbleiben und nur mit einem erheblichen Aufwand ausgesonderte werden können. Dies führt dazu, dass bei einer anschließenden Auftrennung des für ein Recycling vorgesehenen Kunststoffmaterials die jeweiligen Kunststoffmengen verunreinigt sind und eine nachfolgende erneute Verwendung des Kunststoffmaterials beeinträchtigen.

Um die Ausbeute zu erhöhen und die Trenneffizienz zu erhöhen wurde beispielsweise versucht, das Windsichten zu verbessern, durch Steuern von Bandgeschwindigkeit oder Empfindlichkeit der Sensoren das Verfahren zu optimieren oder die Abscheidung des Kunststoffmaterials mit Handsortierung oder aufwendigen Kunststoffmahlgut-Sortiervorrichtungen zu unterstützen und zu verbessern. Dieses erweist sich als kostenaufwendig und umständlich.

Es wurde auch versucht, zunächst große Metallteile auszusondern und dann in einem nachgeordneten Schritt unvermeidlich in dem Gemenge enthaltene Fragmente und kleine Metallteile auszusondern. Dieses erweist sich als kostenintensiv.

Bei einem beispielsweise in WO 1998/018607 beschriebenen Verfahren wird das metall- und kunststoffhaltige Gemenge an Abfällen zunächst zum Aufschluss in Wasser unter mechanischer Krafteinwirkung bewegt, um aus der dadurch gebildeten Suspension die Feststoffanteile abtrennen zu können. Aus den abgetrennten Feststoffanteilen können nachfolgend durch eine Sink-Schwimm-Scheidung gezielt Polyolefin-Kunststoffe abgetrennt werden. Ein solches Verfahren ist für die Abtrennung von Metallrohstoffen, die einer Wiederverwertung zugeführt werden sollen, nicht zweckmäßig, da zunächst eine Nasstrennung des gesamten metall- und kunststoffhaltigen Gemenges durchgeführt werden muss, um anschließend nach einer erforderlich werdenden Trocknung die Metallanteile mit geeigneten Trennverfahren aussondern zu können.

In der DE 41 00 346 A1 wird ein speziell zur Aufbereitung von Elektronikschrott angepasstes Verfahren beschrieben. Bei diesem Verfahren wird der Elektronikschrott zunächst manuell in seine Hauptbestandteile zerlegt und nach geeigneten Fraktionen sortiert. Anschließend werden die Fraktionen getrennt voneinander vorzerkleinert und grobe Metallanteile durch eine Magnetabscheidung und eine Wirbelstromabscheidung abgetrennt. Danach wird das verbliebene Material nochmals zerkleinert und weitere Eisenanteile durch Magnetabscheidung abgetrennt. Zudem wird ein Nicht-Eisenmetall-Anteil durch Sichtung oder elektrostatische Abscheidung abgetrennt. Schließlich erfolgen eine Feinzerkleinerung und eine Nasstrennung des verbliebenen Materials.

Aufgabe der Erfindung ist, ein Verfahren vorzuschlagen, bei dem kostengünstig und effizient eine frühzeitige Trennung von Metallteilen und Kunststoffmaterial erfolgen kann, bzw. verbessert wird.

Die Aufgabe wird durch ein erfindungsgemäßes Verfahren gelöst, bei welchem beim Zerkleinern eine Korngröße des metall- und kunststoffhaltigen Gemenges von weniger als 50 mm, bevorzugt 5 bis 15 mm, eingestellt wird, wobei dem Zerkleinern des metall- und kunststoffhaltigen Gemenges ein Sieben des metall- und kunststoffhaltigen Gemenges vorgeschaltet ist, um kleine Störstoffe zu entsorgen.. Hierdurch umfasst das metall- und kunststoffhaltigen Gemenge im Wesentlichen nahezu gleich große Einzelteile, bzw. ausschließlich Partikel mit einer vorgegebenen maximalen Größe. Durch die Wirbelstromabscheidung des bereits zerkleinerten Gemenges kann die Größe der Partikel, die mit der Wirbelstromabscheidung ausgesondert werden können, an die Größe der zerkleinerten Partikel des Gemenges angepasst werden, so dass auch kleinere Fragmente etc. ausgesondert werden, die ansonsten von einer Wirbelstromabscheidung von größeren Objekten, beispielsweise Getränkedosen etc., nicht erfasst wären.

Eine vorausgehende Wirbelstromabscheidung bei dem noch unzerkleinerten Gemenge ist nicht mehr notwendig. Im Gegensatz zu den bereits bekannten Verfahren, bei denen beispielsweise manuell größere Metall-Fragmente von anderen Fragmenten des Gemenges getrennt und kleinere Metall-Fragmente durch eine Dichtetrennung, beispielsweise durch Schwimm-Sink-Trennverfahren aus dem Gemenge abgeschieden werden, lässt sich mit der Wirbelstromabscheidung eines zerkleinerten Gemenges in einem frühen Stadium der Aufbereitung bereits ein sehr großer metallischer Anteil des Gemenges effizient abtrennen. Nachfolgende Verfahrensschritte, die regelmäßig eine Dichtetrennung einzelner Kunststoffanteile mit Schwimm-Sink-Trennverfahren beinhalten, müssen nicht mehr für die bereits abgetrennten metallischen Anteile durchgeführt werden. Dadurch können erhebliche Mengen an Wasser und ein merklicher Energie- und Zeitaufwand für gegebenenfalls mehrfache Trocknungsverfahren eingespart werden, die erforderlich werden, wenn erst nach der Durchführung von Schwimm-Sink-Trennverfahren eine Wirbelstromabscheidung durchgeführt wird.

Auf diese Weise ist die Effizienz des Verfahrens erhöht und ein Austrag (Verlust) von wertvollem Recyclingmaterial reduziert.

Dadurch, dass dem Zerkleinern des metallhaltigen Gemenges das Sieben des metallhaltigen Gemenges vorgeschaltet ist, um kleine Störstoffe zu entsorgen, werden kleine Teile ausgesondert und eine minimale Korngröße des verbleibenden metallhaltigen Gemenges realisiert, auf die die Steuereinheit eines Windsichters einstellbar ist. Hierdurch ist die Effizienz des Verfahrens weiter verbessert.

Durch das Zerkleinern auf eine Korngröße des metallhaltigen Gemenges von weniger als 50 mm, bevorzugt 5 bis 15 mm, kann eine maximale Korngröße des metall- und kunststoffhaltigen Gemenges vorgegeben werden und an die nachfolgende Wirbelstromabscheidung angepasst werden, was die Effizienz des Verfahrens weiter steigert.

Es erweist sich als vorteilhaft, wenn dem Zerkleinern ein FE-Abscheiden vorgeschaltet ist, das dem metallhaltigen Gemenge Teile aus Eisenmetall (FE-Metalle) entzieht. Unter FE-Metallen werden Eisenmetalle, also eisenhaltige Metalle verstanden, die beispielsweise mit Magnetkraft erfasst und ausgesondert werden können. Hingegen umfassen NE-Metalle Metalle, die kein Eisen umfassen. Durch das frühzeitige Abscheiden von Eisenmetallen ist der Verschleiß der Zerkleinerers beim Zerkleinern reduziert.

Zusätzlich oder alternativ zu der FE-Abscheidung vor der Zerkleinerung kann eine FE-Abscheidung unmittelbar vor einer Wirbelstromabscheidung durchgeführt werden. Enthält das der Wirbelstromabscheidung zugeführte Gemenge einen merklichen Anteil von FE-Metallen, so wird dadurch die Effizienz der Wirbelstromabscheidung herabgesetzt und ein unerwünscht hoher Anteil von NE-Metallen nicht zuverlässig ausgesondert.

Bei einer Weiterbildung der Erfindung ist vorgesehen, dass mindestens einmal ein Windsichten des metall- und kunststoffhaltigen Gemenges erfolgt. Durch die Windsichtung können gegebenenfalls mehrfach jeweils leichte Partikel des Gemenges ausgesondert werden. Dies betrifft insbesondere Etiketten von Kunststoffflaschen oder dergleichen.

Schließlich sieht eine Weiterbildung des Verfahrens vor, dass zwischen dem Zerkleinern und dem Windsichten zumindest ein weiterer Verfahrensschritt vorgesehen ist, insbesondere eine Wäsche, bevorzugt Kaltwäsche, des metallhaltigen Gemenges.

Zur Steigerung der Effizienz erweist es sich als vorteilhaft, wenn auch die Empfindlichkeit von Sensoren zur Erkennung von Metall- oder Kunststoffteilen und/oder die Zeitverzögerung nach der Erkennung auszusortierender Partikel und/oder dass Parameter des Wirbelstromabscheidens, des Windsichtens und/oder beispielsweise eine Bandgeschwindigkeit einer Transporteinrichtung in Abhängigkeit der Korngröße gesteuert werden.

Die einzelnen Verfahrensschritte können jeweils auch mehrfach bzw. in einer vorgegebenen Reihenfolge mehrfach hintereinander durchgeführt werden, um bereits vor einer anschließenden Dichtetrennung in einem Flüssigkeitsbad, bzw. einer Schwimm-Sink-Trennung die Auftrennung des Gemenges in möglichst sortenreine Materialmengen einerseits aus Metall und andererseits aus Kunststoff zu erreichen, bzw. gewährleisten zu können.

Die Erfindung betrifft auch eine Anlage zur Aufbereitung eines metall- und kunststoffhaltigen Gemenges beispielsweise von Abfällen, bzw. von Recyclingmaterial mit einer Mehrzahl von aufeinanderfolgenden Bearbeitungsstationen, die zumindest einen Zerkleinerer und eine Trennungsanlage für Kunststoffpolymere umfassen, wobei die aufeinanderfolgenden Bearbeitungsstationen zumindest einen Wirbelstromabscheider umfassen, der funktional nach dem Zerkleinerer angeordnet ist und vor einer Bearbeitungsstation angeordnet ist, mit der eine Dichtetrennung in einem Flüssigkeitsbad, beispielsweise eine Schwimm-Sink-Trennung durchgeführt werden kann, wobei erfindungsgemäß vorgesehen ist, dass der Zerkleinerer eine Zerkleinerungseinheit zur Zerkleinerung des metall- und kunststoffhaltigen Gemenges auf eine Korngröße von weniger als 50 mm, bevorzugt 5 mm bis 15 mm, aufweist, und dass es sich bei einer der Bearbeitungsstationen um eine Siebrinne handelt, wobei die Siebrinne funktional vor dem Zerkleinerer angeordnet ist.

Es erweist sich als vorteilhaft, wenn die aufeinanderfolgenden Bearbeitungsstationen zumindest einen FE-Abscheider aufweisen, um FE-Metall aus dem metallhaltigen Gemenge auszuscheiden, der funktional vor dem Zerkleinerer und/oder vorzugsweise unmittelbar vor dem Wirbelstromabscheider angeordnet ist. Hierdurch können FE-Metalle auf einfache Weise von dem Gemenge getrennt werden und die Effizienz der Wirbelstromabscheidung von NE-Metallen erhöht werden.

Darüber hinaus ist bei einer Weiterbildung der Erfindung vorgesehen, dass der Wirbelstromabscheider eine Steuereinheit aufweist, mittels der eine gesteuerte Abscheidung insbesondere von NE-Metallen von dem metall- und kunststoffhaltigen Gemenge durch den Wirbelstromabscheider vorgebbar ist.

Schließlich erweist es sich als vorteilhaft, wenn eine Steuereinheit der Anlage in Abhängigkeit der Korngröße des metall- und kunststoffhaltigen Gemenges Parameter der einzelnen Bearbeitungsstationen wie beispielsweise des Wirbelstromabscheiders, der Bandgeschwindigkeit einer Transporteinrichtung, der Empfindlichkeit von Sensoren zur Erkennung von Metall- oder Kunststoffteilen, der Zeitverzögerung nach der Erkennung der Metall- oder Kunststoffteilen sowie Parameter des Windsichtens steuert.

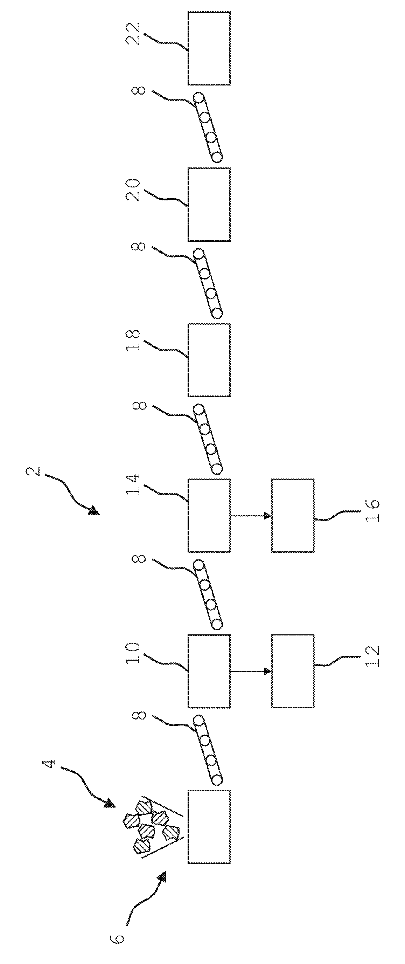

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung. In der Figur ist lediglich beispielhaft ein stark vereinfachtes Ablaufdiagramm des erfindungsgemäßen Verfahrens dargestellt.

Die Figur zeigt einen Ablaufdiagramm des erfindungsgemäßen Verfahrens, welches in einer insgesamt mit dem Bezugszeichen 2 versehenen schematisch dargestellten Anlage zur Aufbereitung eines metall- und kunststoffhaltigen Gemenges von zu verwertenden Materialien mit verschiedenen Bearbeitungsstationen ausführbar ist. Die Figur zeigt lediglich einen Ausschnitt, der die für das erfindungsgemäße Verfahren relevanten Verfahrensschritte zeigt. Den gezeigten Verfahrensschritten, bzw. Bearbeitungsstationen sind üblicherweise weitere Verfahrensschritte und Bearbeitungsstationen nachgeschaltet, die nicht gezeigt sind und insbesondere eine Dichtetrennung über Schwimm-Sink-Trennverfahren beinhalten.

Der Anlage 2 wird ein metall- und kunststoffhaltiges Gemenge 4, das beispielsweise aus Abfällen oder bereits vorbereitetem Recyclingmaterial besteht, über eine Zuführung 6 zugeführt. Über ein Förderband 8 wird das metall- und kunststoffhaltige Gemenge 4 einer FE-Trennvorrichtung 10 zugeführt. In der FE-Trennvorrichtung 10 werden beispielsweise mit Hilfe eines magnetischen Trennverfahrens im Wesentlichen größere FE-Metallteile aus dem metall- und kunststoffhaltigen Gemenge 4 entfernt und einem Speicher 12 für FE-Metalle zugeführt, so dass die FE-Trennvorrichtung als FE-Abscheider dient. Aus dem Speicher 12 können die FE-Metalle dann einer Verwertung zugeführt werden. NE-Metalle und Anteile von FE-Metallen allerdings verbleiben hierbei im metall- und kunststoffhaltigen Gemenge 4. Der verbleibende, ganz überwiegende Anteil des metall- und kunststoffhaltigen Gemenges 4 wird anschließend mit einem weiteren Förderband 8 weitergefördert.

Über das Förderband 8 wird das metall- und kunststoffhaltigen Gemenge 4 einer Siebrinne 14 zugeführt, durch die Kleinstörstoffe abgeschieden und einer Entsorgung 16 zugeführt werden.

Das verbleibende metall- und kunststoffhaltigen Gemenge 4 wird anschließend einem Zerkleinerer 18 zugeführt, der das metall- und kunststoffhaltige Gemenge 4 auf eine Korngröße von 5 bis 15 mm zerkleinert.

Das metall- und kunststoffhaltige Gemenge 4 wird anschließend einem Wirbelstromabscheider 20 zugeführt.

Der Wirbelstromabscheider 20 trennt die zerkleinerten Metallteile und insbesondere die verbleibenden NE-Metalle vom restlichen Gemenge 4.

Durch das Anordnen der Zerkleinerers 18 vor dem Wirbelstromabscheider 20 können die Sensoren des Wirbelstromabscheiders auf eine vorgegebene maximale Korngröße des Gemenges 4 und der darin enthaltenen Metallteile eingestellt werden. Auf diese Weise werden in einem einzigen Verfahrensschritt mit der nach der Zerkleinerung angeordneten Wirbelstromabscheidung die allermeisten großen wie kleinen Metallteile und Metallpartikel aus dem Gemenge 4 entfernt. Eine gesonderte Wirbelstromabscheidung des unzerkleinerten Gemenges ist nicht erforderlich. Die verbleibenden Kunststoffe können mit einer erheblich geringeren Verunreinigung ausgesondert, bzw. getrennt und einer weiteren Verwertung zugeführt werden.

Das metall- und kunststoffhaltige Gemenge 4 wird anschließend erneut einem FE-Abscheider 22 zugeführt, bevor es einer als Kaltwäsche realisierten Wäsche zugeführt wird. Der FE-Abscheider 22 trennt die bis dahin in dem Gemenge 4 verbliebenen zerkleinerten magnetischen Metallteile von dem Gemenge 4 ab. Eine zusätzliche, üblicherweise vor der FE-Trennung durchgeführte Windsichtung sowie die Wäsche erlauben eine zusätzliche Auftrennung der einzelnen Fraktionen bzw. dienen als Vorbereitung für nachfolgende Bearbeitungsstationen, bzw. für eine nachfolgende Dichtetrennung mittels geeigneter Schwimm-Sink-Verfahren.

Hierdurch ist die Ausbeute an qualitativ hochwertigen Wertstoffen verbessert und die Effizienz der Anlage 2 erhöht.

## Patentansprüche

1. Verfahren zur Aufbereitung eines metall- und kunststoffhaltigen Gemenges (4) beispielsweise von Abfällen, bzw. von Recyclingmaterial für den Betrieb einer Recyclinganlage (2), die eine Mehrzahl von aufeinanderfolgenden Bearbeitungsstationen aufweist, bei dem zumindest eine Dichtetrennung des Gemenges in einem Flüssigkeitsbad und eine Zerkleinerung des Gemenges (4) durchgeführt wird, wobei vor einer ersten Dichtetrennung des Gemenges (4) in einem Flüssigkeitsbad das metall- und kunststoffhaltige Gemenge (4) zerkleinert und nachfolgend eine Wirbelstromabscheidung von zerkleinerten Metallteilen durchgeführt wird, bevor anschließend eine Dichtetrennung des Gemenges (4) in einem Flüssigkeitsbad durchgeführt wird, **dadurch gekennzeichnet, dass** beim Zerkleinern eine Korngröße des metall- und kunststoffhaltigen Gemenges (4) von weniger als 50 mm, bevorzugt 5 bis 15 mm, eingestellt wird, wobei dem Zerkleinern des metall- und kunststoffhaltigen Gemenges (4) ein Sieben des metall- und kunststoffhaltigen Gemenges (4) vorgeschaltet ist, um kleine Störstoffe zu entsorgen.

2. Verfahren nach Anspruch 1, **dadurch gekennzeichnet, dass** der Wirbelstromabscheidung ein Verfahrensschritt zur FE-Abscheidung vorgeschaltet ist, das dem metall- und kunststoffhaltigen Gemenge (4) Teile aus Eisenmetall (FE-Metalle) entzieht.

3. Verfahren nach einem der vorhergehenden Ansprüche, **dadurch gekennzeichnet, dass** mindestens einmal ein Windsichten (22) des metall- und kunststoffhaltigen Gemenges (4) erfolgt.

4. Verfahren nach einem der vorhergehenden Ansprüche, **dadurch gekennzeichnet, dass** nach dem Zerkleinern und dem Windsichten (22) zumindest eine Wäsche, bevorzugt Kaltwäsche, des metall- und kunststoffhaltigen Gemenges (4) vorgesehen ist.

5. Verfahren nach einem der vorhergehenden Ansprüche, **dadurch gekennzeichnet, dass** die Empfindlichkeit von Sensoren zur Erkennung von Metall- oder Kunststoffteilen und/oder die Zeitverzögerung nach der Erkennung zu trennender Metall- oder Kunststoffteile und/oder dass Parameter des Wirbelstromabscheidens bzw. des Windsichtens (22) und/oder beispielsweise eine Bandgeschwindigkeit einer Transporteinrichtung (8) in Abhängigkeit der Korngröße gesteuert werden.

6. Anlage (2) zur Aufbereitung eines metall- und kunststoffhaltigen Gemenges (4) beispielsweise von Abfällen, bzw. von Recyclingmaterial mit einer Mehrzahl von aufeinanderfolgenden Bearbeitungsstationen, die zumindest einen Zerkleinerer und eine Trennungsanlage für Kunststoffpolymere umfassen, wobei die aufeinanderfolgenden Bearbeitungsstationen zumindest einen Wirbelstromabscheider (20) umfassen, der funktional nach dem Zerkleinerer (18) angeordnet ist und vor einer Vorrichtung zur Dichtetrennung angeordnet ist, mit der eine Dichtetrennung des Gemenges (4) in einem Flüssigkeitsbad durchgeführt werden kann, **dadurch gekennzeichnet, dass** der Zerkleinerer (18) eine Zerkleinerungseinheit zur Zerkleinerung des metall- und kunststoffhaltigen Gemenges (4) auf eine Korngröße von weniger als 50 mm, bevorzugt 5 mm bis 15 mm, aufweist, und dass es sich bei einer der Bearbeitungsstationen um eine Siebrinne (14) handelt, wobei die Siebrinne (14) funktional vor dem Zerkleinerer (18) angeordnet ist.

7. Anlage (2) nach Anspruch 6, **dadurch gekennzeichnet, dass** der Wirbelstromabscheider (20) eine Steuereinheit umfasst, mittels der eine gesteuerte Abscheidung insbesondere von NE-Metallen von dem metall- und kunststoffhaltigen Gemenge (4) durch den Wirbelstromabscheider (20) vorgebbar ist.

8. Anlage (2) nach Anspruch 6 oder 7, **dadurch gekennzeichnet, dass** die aufeinanderfolgenden Bearbeitungsstationen zumindest einen FE-Abscheider aufweisen, um FE-Metall aus dem metall- und kunststoffhaltigen Gemenge auszuscheiden, der funktional vor dem Zerkleinerer (18) und/oder vorzugsweise unmittelbar vor dem Wirbelstromabscheider (20) angeordnet ist.

9. Anlage (2) nach einem der Ansprüche 6 bis 8, **dadurch gekennzeichnet, dass** die Steuereinheit in Abhängigkeit der Korngröße des metall- und kunststoffhaltigen Gemenges (4) Parameter der Bearbeitungsstationen wie beispielsweise des Wirbelstromabscheiders (20), der Bandgeschwindigkeit einer Transporteinrichtung (8), der Empfindlichkeit von Sensoren zur Erkennung von Metall- und Kunststoffteilen, der Zeitverzögerung nach der Erkennung auszusondernder Metall- und Kunststoffteile sowie Parameter des Windsichtens (22) oder einer gegebenenfalls verwendeten Kunststoffflocken-Sortiereinrichtung steuert.

## Claims

1. Method for processing a metal- and plastic-containing mixture (4) for example of waste or of recycling material for the operation of a recycling plant (2) which has a plurality of successive processing stations in which at least one density separation of the mixture in a liquid bath and a comminution of the mixture (4) are carried out, wherein, prior to a first density separation of the mixture (4) in a liquid bath, the metal- and plastic-containing mixture (4) is comminuted and an eddy current separation of comminuted metal parts is subsequently carried out before a density separation of the mixture (4) in a liquid bath is then carried out, **characterized in that** a particle size of the metal- and plastic-containing mixture (4) of less than 50 mm, preferably from 5 to 15 mm, is set for the comminution, wherein the comminution of the metal- and plastic-containing mixture (4) is preceded by a sieving of the metal- and plastic-containing mixture (4) in order to dispose of small contaminants.

2. Method according to Claim 1, **characterized in that** the eddy current separation is preceded by a method step for FE separation which removes parts consisting of ferrous metal (FE metals) from the metal- and plastic-containing mixture (4).

3. Method according to either of the preceding claims, **characterized in that** an air classification (22) of the metal- and plastic-containing mixture (4) is carried out at least once.

4. Method according to one of the preceding claims, **characterized in that**, after comminution and air classification (22), at least one washing, preferably cold washing, of the metal- and plastic-containing mixture (4) is provided.

5. Method according to one of the preceding claims, **characterized in that** the sensitivity of sensors for detecting metal or plastic parts and/or the time delay after the detection of metal or plastic parts to be separated are controlled as a function of the particle size, and/or **in that** parameters of the eddy current separation or air classification (22) and/or for example a belt speed of a conveying device (8) are controlled as a function of the particle size.

6. Plant (2) for processing a metal- and plastic-containing mixture (4) for example of waste or of recycling material having a plurality of successive processing stations which comprise at least one comminutor and a separating unit for plastic polymers, wherein the successive processing stations comprise at least one eddy current separator (20) which is functionally arranged downstream of the comminutor (18) and is arranged upstream of a device for density separation by means of which a density separation of the mixture (4) in a liquid bath can be carried out, **characterized in that** the comminutor (18) has a comminuting unit for comminuting the metal- and plastic-containing mixture (4) to a particle size of less than 50 mm, preferably from 5 mm to 15 mm, and **in that** one of the processing stations is a sieving trough (14), wherein the sieving trough (14) is functionally arranged upstream of the comminutor (18).

7. Plant (2) according to Claim 6, **characterized in that** the eddy current separator (20) comprises a control unit by means of which a controlled separation in particular of NF metals from the metal- and plastic-containing mixture (4) by the eddy current separator (20) can be predetermined.

8. Plant (2) according to Claim 6 or 7, **characterized in that** the successive processing stations have at least one FE separator in order to separate FE metal out of the metal- and plastic-containing mixture, which separator is functionally arranged upstream of the comminutor (18) and/or preferably directly upstream of the eddy current separator (20).

9. Plant (2) according to one of Claims 6 to 8, **characterized in that** the control unit controls, as a function of the particle size of the metal- and plastic-containing mixture (4), parameters of the processing stations, such as, for example, the eddy current separator (20), the belt speed of a conveying device (8), the sensitivity of sensors for detecting metal and plastic parts, the time delay after the detection of metal and plastic parts to be separated out and parameters of the air classification (22) or an optionally used plastic flake sorting device.

## Revendications

1. Procédé de préparation d'un mélange contenant du métal et une matière synthétique (4), par exemple de déchets, ou de matières de recyclage pour la conduite d'une installation de recyclage (2), qui présente une multiplicité de stations de traitement successives, dans lequel on effectue au moins une séparation par densité du mélange dans un bain liquide et un broyage du mélange (4), dans lequel, avant une première séparation par densité du mélange (4) dans un bain liquide, on broie le mélange (4) contenant du métal et une matière synthétique et on effectue une séparation en écoulement tourbillonnaire de particules de métal broyées, avant d'effectuer ensuite une séparation par densité du mélange (4) dans un bain liquide, **caractérisé en ce que** l'on règle lors du broyage une grosseur de grain du mélange (4) contenant du métal et une matière synthétique de moins de 50 mm, de préférence de 5 à 15 mm, dans lequel le broyage du mélange (4) contenant du métal et une matière synthétique est précédé par un criblage du mélange (4) contenant du métal et une matière synthétique, afin d'éliminer des petites matières parasites.

2. Procédé selon la revendication 1, **caractérisé en ce que** la séparation en écoulement tourbillonnaire est précédée par une étape de procédé pour la séparation du FE, qui extrait des parties en métal ferreux (métaux FE) hors du mélange (4) contenant du métal et une matière synthétique.

3. Procédé selon l'une quelconque des revendications précédentes, **caractérisé en ce que** l'on effectue au moins une fois un triage pneumatique (22) du mélange (4) contenant du métal et une matière synthétique.

4. Procédé selon l'une quelconque des revendications précédentes, **caractérisé en ce qu'**il est prévu, après le broyage et le triage pneumatique (22), au moins un lavage, de préférence un lavage à froid, du mélange (4) contenant du métal et une matière synthétique.

5. Procédé selon l'une quelconque des revendications précédentes, **caractérisé en ce que** l'on commande la sensibilité de capteurs pour reconnaître des particules de métal ou de matière synthétique et/ou le retard temporel après la reconnaissance de particules de métal ou de matière synthétique à séparer et/ou **en ce que** l'on commande des paramètres de la séparation en écoulement tourbillonnaire ou du triage pneumatique (22) et/ou par exemple une vitesse de bande d'un dispositif de transport (8) en fonction de la grosseur de grain.

6. Installation (2) pour la préparation d'un mélange (4) contenant du métal et une matière synthétique, par exemple de déchets ou de matières de recyclage avec une multiplicité de stations de traitement successives, qui comprennent au moins un broyeur et une installation de séparation pour des polymères de matière synthétique, dans laquelle les stations de traitement successives comprennent au moins un séparateur à écoulement tourbillonnaire (20), qui est disposé fonctionnellement après le broyeur (18) et avant un dispositif de séparation par densité, avec lequel on peut effectuer une séparation par densité du mélange (4) contenant du métal et une matière synthétique dans un bain liquide, **caractérisée en ce que** le broyeur (18) présente une unité de broyage pour le broyage du mélange (4) contenant du métal et une matière synthétique à une grosseur de grain de moins de 50 mm, de préférence de 5 à 15 mm, et **en ce qu'**une des stations de traitement est une rigole de triage (14), dans laquelle la rigole de triage (14) est disposée fonctionnellement avant le broyeur (18).

7. Installation (2) selon la revendication 6, **caractérisée en ce que** le séparateur à écoulement tourbillonnaire (20) comprend une unité de commande, au moyen de laquelle une séparation commandée en particulier de métaux NE du mélange (4) contenant du métal et une matière synthétique par le séparateur à écoulement tourbillonnaire (20) peut être prédéterminée.

8. Installation (2) selon la revendication 6 ou 7, **caractérisée en ce que** les stations de traitement successives présentent au moins un séparateur FE, afin de séparer les métaux FE hors du mélange contenant du métal et une matière synthétique, qui est disposé fonctionnellement avant le broyeur (18) et/ou de préférence immédiatement avant le séparateur à écoulement tourbillonnaire (20).

9. Installation (2) selon l'une quelconque des revendications 6 à 8, **caractérisée en ce que** l'unité de commande commande, en fonction de la grosseur de grain du mélange (4) contenant du métal et une matière synthétique, des paramètres des stations de traitement comme par exemple du séparateur à écoulement tourbillonnaire (20), de la vitesse de bande d'un dispositif de transport (8), de la sensibilité de capteurs pour reconnaître des particules de métal et de matière synthétique, du retard temporel après la reconnaissance de particules de métal et de matière synthétique à extraire ainsi que des paramètres du triage pneumatique (22) ou d'un dispositif de triage de flocons de matière synthétique éventuellement utilisé.
